# EUROPÄISCHE PATENTSCHRIFT

(11) **EP 3 457 089 B1**
(45) Veröffentlichungstag und Bekanntmachung des Hinweises auf die Patenterteilung: **04.08.2021**
(21) Anmeldenummer: 18000700.7
(22) Anmeldetag: 28.08.2018
(51) Int. Cl.: G01D 4/00, H04L 29/08

(54) **VERFAHREN ZUM BETRIEB EINES VERBRAUCHSZÄHLERSYSTEMS**
METHOD FOR OPERATING A CONSUMPTION METER
PROCÉDÉ DE FONCTIONNEMENT D'UN COMPTEUR DE CONSOMMATION

(30) Priorität: 13.09.2017 DE 102017008593
(43) Veröffentlichungstag der Anmeldung: 20.03.2019
(73) Patentinhaber: Diehl Metering Systems GmbH, 90451 Nürnberg (DE)
(72) Erfinder: Schmidt, Achim, DE - 91367 Weißenohe (DE); Schaaf, Matthias, DE - 91785 Pleinfeld (DE)
(74) Vertreter: Diehl Patentabteilung

(56) Entgegenhaltungen:
- DE-A1-102012 203 518
- FR-A1- 3 014 188
- US-A1- 2015 101 016

## Beschreibung

Die vorliegende Erfindung betrifft ein Verfahren zum Betrieb eines Verbrauchszählersystems gemäß dem Oberbegriff des Anspruchs 1 sowie einen Verbrauchszähler zur Verbrauchsbestimmung.

### Technologischer Hintergrund

Intelligente Verbrauchszähler, auch Smart Meter genannt, sind in ein Versorgungsnetz eines übergeordneten Versorgers eingebundene Verbrauchsmessgeräte, z. B. für Gas, Wasser, Strom oder Wärmemenge, die dem jeweiligen Anschlussbenutzer bzw. Verbraucher den tatsächlichen Verbrauch anzeigen. Gattungsgemäße Smart Meter sind üblicherweise in Gewerbe- oder Wohneinheiten des jeweiligen Verbrauchers installiert. Die dort anfallenden Messdaten können auf unterschiedlichste Weise auch direkt durch den Versorger ausgelesen werden. Beispielsweise können die Messdaten über das Stromnetz (Power Line) oder über Funk ausgelesen werden. Dadurch entfallen manuelle Ablesungen der Zählerstände und seitens des Versorgers können kurzfristigere Rechnungstellungen gemäß dem tatsächlichen Verbrauch vorgenommen werden. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Die Verbrauchsbestimmung erfolgt in der Regel anhand einer Messanordnung des Smart Meters, z. B. einer Messanordnung zur Durchflussmengenbestimmung. Ferner besitzen gattungsgemäße Smart Meter eine Steuer- und Auswerteeinheit zum Erzeugen der Verbrauchsdaten und zum Steuern des Smart Meters sowie eine Sende- und Empfangseinrichtung zum Übertragen der Daten, z. B. an die Schaltzentrale oder einen Datensammler des Versorgers.

Smart Meter werden zunehmend auch in Verbraucheranwendungen wie Smart-Home-Steuerungen bzw. Hausautomationsnetzwerken eingesetzt. Insbesondere aufgrund von Sicherheitsrisiken handelt es sich hierbei jedoch in der Regel um zusätzliche vom Verbraucher zu installierende Smart Meter, die neben dem Smart Meter des Versorgers zur Verbrauchsbestimmung in das Versorgungsnetz installiert werden. Gattungsgemäße Smart-Home-Steuerungen dienen dazu, die Wohn- und Lebensqualität sowie die Sicherheit zu verbessern, indem Geräte des täglichen Gebrauchs (z. B. Entertainmentsysteme, Lampen, Jalousien, Alarmanlagen, Heizung, Kühlschrank und Kaffeemaschine) sowie deren Betriebsabläufe vernetzt und automatisiert werden. Ferner dienen Smart Meter innerhalb von Smart-Home-Steuerungen dazu, eine intelligente Regulierung des Energieverbrauchs durchzuführen und dem Verbraucher die aktuellen Verbrauchsdaten z. B. über ein Bedienpanel der Smart-Home-Steuerung anzuzeigen.

### Druckschriftlicher Stand der Technik

Die DE 10 2012 203 354 A1 beschreibt ein Verfahren zur Personalisierung eines Smart Meters, bei dem die Verbrauchsdaten über ein im Smart Meter verbautes Sicherheitsmodul an den Versorger weitergeleitet werden. Das Sicherheitsmodul kommuniziert hierbei mit einer vertrauenswürdigen Instanz bzw. mit dem Versorger. Die Verbindung zum Versorger erfolgt drahtlos oder drahtgebundenen über einen Datenkanal. Die Authentifizierung des Versorgers am Sicherheitsmodul erfolgt über ein kryptografisches Protokoll, wie z. B. einen symmetrischen Schlüssel oder asymmetrischen Schlüssel. Die Verbrauchszähler senden die Verbrauchsdaten ausschließlich über den Datenkanal im Funknetz des Netzbetreibers (z. B. des Energieversorgers). Auf diesen Datenkanal besteht eine Ende-zu-Ende-Sicherheit, d. h. die Daten werden vom Verbrauchszähler verschlüsselt und seitens des Versorgers nach der Übertragung bzw. dem Empfang mit dem dazugehörigen Schlüssel entschlüsselt. Dadurch können die Daten von Dritten nicht verwendet werden. Demgegenüber ist eine Anbindung eines weiteren Empfängers, wie z. B. einer Verbraucheranwendung des Verbrauchers, jedoch nur dadurch möglich, dass der Versorger dem Verbraucher den Schlüssel offenlegt, wodurch ein Einfalltor für Dritte geschaffen wird. Dies stellt eine Bedrohung für die Gesamtsicherheit des Versorgungsnetzes dar. Zudem sind die Eigenschaften des Datenkanals des Versorgers in der Regel für Verbraucheranwendungen ungeeignet, da diese an die Maßgaben des Versorgers gebunden sind.

Aus der DE 10 2012 203 518 A1 ist ein Verfahren bekannt, bei dem ein oder mehrere Verbrauchszähler über eine Kommunikationsverbindung mit einem Gateway mit Sicherheitsmodul verbunden sind. Das Sicherheitsmodul des Gateways kommuniziert über einen ersten verschlüsselten Kommunikationskanal mit einem ersten Computersystem eines Energieversorgers. Zur Authentifizierung und Initialisierung ist ein zweiter ebenfalls verschlüsselter Kommunikationskanal zwischen dem Gateway und einer vertrauenswürdigen Instanz vorgesehen. Nach erfolgter Authentifizierung und Empfang von Daten der vertrauenswürdigen Instanz durch das Gateway, wird im Gateway ein Speicherbereich initialisiert, woraufhin Daten des Speicherbereichs des Gateways unter Umgehung des zweiten Computersystems an das erste Computersystem übertragen werden können.

Bei der FR 3 014 188 kommuniziert eine Mehrzahl von Messsensoren über den IEEE 802.15-Standard mit einem Gateway, welches wiederum über das Internet mit einem zentralen Weberver kommuniziert. Das Gateway sorgt für einen Protokollwechsel der Datenübertragung sowie für eine Verschlüsselung des gesamten Kommunikationskanals zwischen dem jeweiligen Messsensor und dem zentralen Webserver.

### Aufgabe der vorliegenden Erfindung

Die Aufgabe der vorliegenden Erfindung besteht darin, ein Verfahren zur Verfügung zu stellen, bei dem die Daten des Verbrauchszählers in einfacher Weise, sicher und kostengünstig an mehrere Empfänger übertragen werden können.

### Lösung der Aufgabe

Die vorstehende Aufgabe wird durch die gesamte Lehre des Anspruchs 1 sowie des nebengeordneten Anspruchs gelöst. Zweckmäßige Ausgestaltungen der Erfindung sind in den Unteransprüchen beansprucht.

Erfindungsgemäß ist ein zweiter Datenkanal zur Übertragung der Daten zwischen dem Verbrauchszähler und einem zweiten Empfänger, der eine Verbraucheranwendung umfasst, vorgesehen. Die Daten werden hierbei über den zweiten Datenkanal mittels eines zusätzlichen zweiten Schlüssels verschlüsselt übertragen, d. h. der zweite Datenkanal stellt eine bestehende Kommunikationsstrecke dar, die Ende-zu-Ende verschlüsselt ist. Daraus resultiert der Vorteil, dass die Daten in einfacher Weise über den zweiten Datenkanal an einen zusätzlichen zweiten Empfänger übertragen werden können, ohne dass dieser den ersten Schlüssel kennt. Der zweite Datenkanal ist individuell konfiguriert, sodass kein Angriffsvektor auf Geräteebene des Verbrauchszählersystems entsteht. Die Sicherheit des Verbrauchszählersystems wird dadurch in besonderem Maße erhöht. Die vom Versorger benötigten Daten können weiterhin über den ersten Datenkanal in geeigneter Weise übertragen werden, d. h. die Datenmenge und Übertragungshäufigkeit auf diesen Kanal kann z. B. gering gehalten werden. Zusätzlich kann der Verbraucher die Daten für sich individuell zusammenstellen bzw. konfigurieren und mittels des zweiten Datenkanals abrufen. Darüber hinaus kann die Übertragungsart, z. B. hinsichtlich Funkstandard, Frequenz, Kanalbelegung oder dergleichen, für den jeweiligen Datenkanal ohne Beeinflussung des anderen Datenkanals angepasst werden. Zudem kann die erfindungsgemäße Lösung kostengünstig und aufwandsarm in bestehenden Systemen installiert bzw. nachgerüstet werden, z. B. in Form eines Firmware-Updates des Verbrauchszählers.
Zweckmäßigerweise werden die Daten vor der Übertragung zählerseitig mit dem ersten und/oder zweiten Schlüssel verschlüsselt und nach der Übertragung durch ersten Empfänger anhand des ersten Schlüssels und/oder durch den zweiten Empfänger anhand des zweiten Schlüssels entschlüsselt. Dadurch wird eine Ende-zu-Ende-Sicherheit des ersten sowie des zweiten Datenkanals gewährleistet.

Vorzugsweise handelt es sich bei dem ersten Schlüssel und/oder zweiten Schlüssel um einen symmetrischen oder asymmetrischen Schlüssel. Bei der Verwendung eines symmetrischen Schlüssels, d. h. der Verbrauchszähler und der jeweilige Empfänger kennen bzw. besitzen den Schlüssel, können entweder sender- und empfängerseitig gleiche Schlüssel oder unterschiedliche, sich gegenseitig berechenbare Schlüssel verwendet werden. Demgegenüber kann es sich auch um einen asymmetrischen Schlüssel handeln, welcher einen öffentlichen sowie privaten Schlüssel (Schlüsselpaar) umfasst. In bevorzugter Weise wird der zweite Schlüssel, z. B. der symmetrische Schlüssel, am Verbrauchszähler angeordnet, sodass dieser nur dem Verbraucher und dem Versorger bzw. dem Installateur zugänglich ist, um Manipulationen zu vermeiden. Demgegenüber ist der private Schlüssel des asymmetrischen Schlüssels vorzugsweise Empfänger-privat, d. h. dieser wird z. B. dem Verbraucher übermittelt, sodass der Verbrauchszähler mit dem öffentlichen Schlüssel verschlüsseln kann. Die Sicherheit wird dadurch in besonderem Maße erhöht.

Gemäß einer bevorzugten Ausgestaltung der vorliegenden Erfindung umfasst dieVerbraucheranwendung ein Hausautomationsnetzwerk bzw. eine sogenannte Smart-Home-Steuerung. Durch die Einbindung des Verbrauchszählers des Versorgers in die Smart-Home-Steuerung des Verbrauchers kann dieser in einfacher Weise z. B. den aktuellen Verbrauch oder die Temperatur des Verbrauchsmediums erhalten, ohne ein zusätzliches Smart-Meter zu installieren. Dadurch können zusätzliche Kosten eingespart werden.

Zweckmäßigerweise kann es sich bei dem zweiten Datenkanal um einen unidirektionalen Datenkanal handeln, über welchen die Daten z. B. vom Verbrauchszähler zur Verbraucheranwendung übertragen werden. Dadurch können die Daten des Verbrauchszählers zur Verbraucheranwendung übertragen werden, jedoch keine Daten von der Verbraucheranwendung oder einen Dritten zum Verbrauchszähler hin. Daraus resultiert der Vorteil, dass kein zusätzliches Einfallstor zum Verbrauchszählersystem geschaffen wird, da der Verbrauchszähler nur zum Senden und nicht für den Empfang über den zweiten Datenkanal konfiguriert ist, z. B. gesperrt ist. Die Sicherheit wird dadurch zusätzlich erhöht.

Alternativ kann es sich bei dem zweiten Datenkanal um einen bidirektionalen Datenkanal handeln, über welchen die Daten z. B. vom Verbrauchszähler zur Verbraucheranwendung und von der Verbraucheranwendung zum Verbrauchszähler übertragen werden. Dadurch kann der Verbrauchszähler direkt von der Verbraucheranwendung angesteuert werden. Beispielsweise können dadurch auch Informationen des Versorgers an die Verbraucheranwendung über den Verbrauchszähler übertragen werden. Zudem kann der Verbrauchszähler bzw. der zweite Datenkanal über die Verbraucheranwendung konfiguriert werden.

Zweckmäßigerweise kann eine Datenverbindung zwischen dem ersten Empfänger und dem zweiten Empfänger vorgesehen sein, wie z. B. eine Internetverbindung oder eine Powerline. Die Datenverbindung kann hierbei dazu hergerichtet sein, Daten vom ersten Empfänger zum zweiten Empfänger zu übertragen. Anschließend können diese Daten vom zweiten Empfänger über den zweiten Datenkanal an den Verbrauchszähler übertragen werden. Somit könnten auch größere Datenmengen in einfacher Weise an den Verbrauchszähler übertragen werden. Beispielsweise könnte dadurch ein Firmware-Update durchgeführt werden, z. B. indem das Firmware-Update vom Versorger über eine Internetsitzung mit der Verbraucheranwendung auf den Verbrauchsmesser eingespielt wird. Dadurch können Wartungskosten sowie Personalaufwand in erheblichem Maße reduziert werden. In gleicher Weise können auch Daten des Verbrauchszählers über die Verbraucheranwendung an den Versorger bzw. die Zentraleinheit übertragen werden. Dadurch können zusätzliche Übertragungssitzungen eingerichtet werden.

Ferner können die Daten, vorzugsweise die Auswahl der Daten, welche über den zweiten Datenkanal gesendet werden, durch den ersten Empfänger bzw. den Versorger und/oder den zweiten Empfänger bzw. den Verbraucher konfigurierbar sein. Beispielsweise können dabei die Sendehäufigkeit und die Verbrauchsparameter eingestellt werden.

Die Konfiguration des Verbrauchszählers kann in praktischer Weise z. B. durch die Zentraleinheit über den ersten Datenkanal oder durch die Verbraucheranwendung über den zweiten Datenkanal erfolgen.

Vorzugsweise ist der zweite Schlüssel über den Verbrauchszähler beziehbar und/oder ablesbar. Dies kann in einfacher Weise dadurch erfolgen, dass der zweite Schlüssel z. B. als Kennungsnummer oder Passwort auf einem Etikett des Verbrauchszählers gedruckt oder in einem Speicher des Verbrauchszählers hinterlegt und an einem Display ablesbar ist.

Zweckmäßigerweise kann es sich bei dem Datenkanal um einen logischen und/oder einen physikalischen Datenkanal handeln. Dadurch wird es beispielsweise ermöglicht, dass der physikalische Datenkanal zur Übertragung der Daten gemeinsam genutzt werden kann, während der logische Datenkanal zum Versorger pro Verbrauchszähler individuell verschlüsselt werden kann.

Bei den Daten handelt es sich vorzugsweise um Verbrauchsdaten, die durch den Verbrauchszähler bestimmt wurden, und/oder Steuer- und/oder Betriebsdaten, die zur Steuerung oder Konfiguration des Verbrauchszählers dienen.

Vorzugsweise umfasst das Verbrauchszählersystem eine Mehrzahl von Verbrauchszählern, wobei die Übertragung der Daten einer Gruppe von Verbrauchszählern zum ersten Empfänger insbesondere über einen gemeinsam genutzten ersten physikalischen Datenkanal erfolgt, wobei der logische Datenkanal jeweils zählerindividuell verschlüsselt ist. Ferner kann die Übertragung der Daten der Gruppe von Verbrauchszählern zu einem zweiten Empfänger anhand eines gemeinsam genutzten zweiten Datenkanals erfolgen. Dabei besitzen alle Verbrauchszähler der Gruppe den ersten Schlüssel zur Übertragung der Daten über den ersten Datenkanal sowie den zweiten Schlüssel zur Übertragung der Daten über den zweiten Datenkanal.

Bei dem Versorgungsmedium handelt es sich vorzugsweise um Gas, Wasser, Strom und/oder Wärmemenge.

Nebengeordnet beansprucht die vorliegende Erfindung einen Verbrauchszähler zur Bestimmung des Verbrauchs an einem Versorgungsmedium durch einen Verbraucher. Der Verbrauchszähler umfasst Mittel zur Verbrauchsbestimmung, eine Energieversorgung, eine Steuer- und Auswerteeinheit zur Erzeugung von Daten aus den bestimmten Werten der Mittel zur Verbrauchsbestimmung sowie eine Sende- und Empfangseinrichtung zum Übertragen der Daten. Die Daten werden hierbei von der Sende- und Empfangseinrichtung über einen ersten Datenkanal zwischen dem Verbrauchszähler und einem ersten Empfänger (z. B. die Schaltzentrale des Versorgers, ein Datensammler oder dergleichen) übertragen. Ferner ist ein zweiter Datenkanal zwischen dem Verbrauchszähler und einem zweiten Empfänger (z. B. eine Verbraucheranwendung, eine Smart-Home-Steuerung oder dergleichen) vorgesehen, über den die Sende- und Empfangseinrichtung die Daten zwischen dem Verbrauchszähler und dem zweiten Empfänger überträgt. Die Daten werden zur Übertragung über den ersten Datenkanal mittels eines ersten Schlüssels und zur Übertragung über den zweiten Datenkanal mittels eines zweiten Schlüssels verschlüsselt.

Vorzugsweise umfassen die Mittel zur Verbrauchsbestimmung eine Messanordnung zum Bestimmen der Durchflussmenge eines Fluids (z. B. Gas oder Wasser), der zugeführten und/oder entnommenen Wärmeenergie oder der Menge einer zugeführten und/oder entnommenen elektrischen Größe (z. B. Strom, Energie, Arbeit, elektrische Ladung). Dementsprechend handelt es sich bei dem Verbrauchszähler um einen Wasser-, Gas-, Wärmemengen- und/oder Stromzähler.

Zweckmäßigerweise können die Schlüssel in einem Speicher des Verbrauchszählers hinterlegt sein, sodass z. B. die Steuer- und Auswerteeinheit die Daten mittels eines Prozessors vor der Übertragung derart verschlüsselt, dass diese durch den ersten Empfänger anhand des ersten Schlüssels und/oder durch den zweiten Empfänger anhand des zweiten Schlüssels nach der Übertragung entschlüsselbar sind. Dadurch wird jeweils eine Ende-zu-Ende-Sicherheit auf dem ersten sowie zweiten Datenkanal gewährleistet, wodurch sich die Übertragungssicherheit in besonderem Maße verbessert.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte schematische Darstellung einer ersten Ausgestaltung eines Verbrauchszählersystems gemäß dem Stand der Technik;
- Fig. 2: eine vereinfachte schematische Darstellung einer weiteren Ausgestaltung eines Verbrauchszählersystems gemäß dem Stand der Technik;
- Fig. 3: eine vereinfachte schematische Darstellung einer Ausgestaltung eines erfindungsgemäßen Verbrauchszählersystems, sowie
- Fig. 4: eine vereinfachte schematische Schnittdarstellung einer Ausgestaltung eines erfindungsgemäßen Verbrauchszählers.

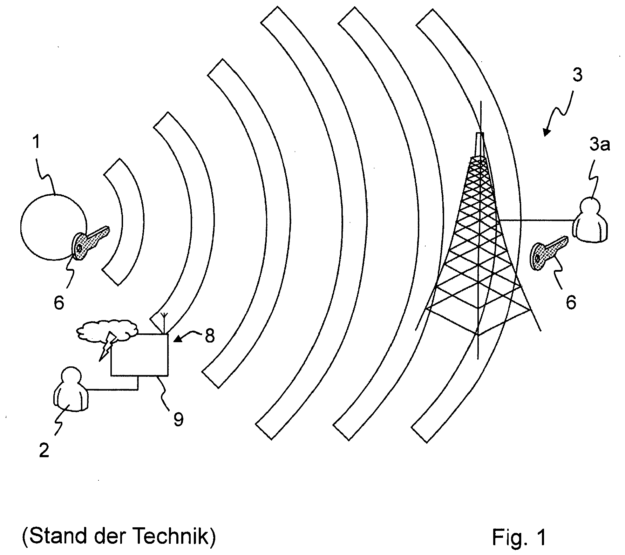

In Fig. 1 ist ein Verbrauchszählersystem gemäß dem Stand der Technik dargestellt. Bei dem Verbrauchszählersystem sendet ein Verbrauchszähler 1 Verbrauchsdaten zu Abrechnungszwecken an einen ersten Empfänger 3, wie z. B. die Schaltzentrale eines Versorgers 3a. Auf diesem Kommunikationskanal bzw. Datenkanal besteht eine Ende-zu-Ende-Verschlüsselung (Ende-zu-Ende-Sicherheit), d. h. die Daten werden vom Verbrauchszähler 1 verschlüsselt und in der Schalzentrale des Versorgers 3a (Head End) mit einem dazugehörigen ersten Schlüssel 6 entschlüsselt. Auf dem Übertragungsweg können die Daten also von Dritten nicht verwendet werden. Ein Verbrauchsdatenabgriff z. B. durch einen zweiten Empfänger 8 ist daher nicht ohne zusätzliche Maßnahmen möglich.

Dritte sind jedoch auch die Endverbraucher bzw. der Verbraucher 2, dessen Verbrauch an einem Versorgungsmedium, z. B. Strom, Wärme, Gas oder Wasser, mit dem jeweiligen Verbrauchszähler 1 erfasst wird. Eine Anbindung des Verbrauchszählers 1 an einen zweiten Empfänger 8 bzw. eine Dateninfrastruktur des Verbrauchers 2, wie z. B. eine Smart-Home-Steuerung 9, wird somit nur möglich, wenn der Versorger 3a seinen Schlüssel 6 dem Verbraucher 2 offenlegt. Das stellt eine Bedrohung für die Gesamtsicherheit des Versorgernetzes dar, besonders da in der Regel nur selten individuelle Schlüssel für einen Verbrauchszähler 1, sondern Gruppenschlüssel für mehrere Verbrauchszähler 1 gepflegt werden. Ferner sind auch andere Eigenschaften des Datenkanals, wie z. B. die Datenrate und Aktualität des Messwertes an die Maßgaben des Versorgers 3a gebunden. Diese sind z. B. für Anwendungen des Verbrauchers 2, wie die Smart-Home-Steuerung 9 mit Verbrauchsüberwachung meist ungeeignet.

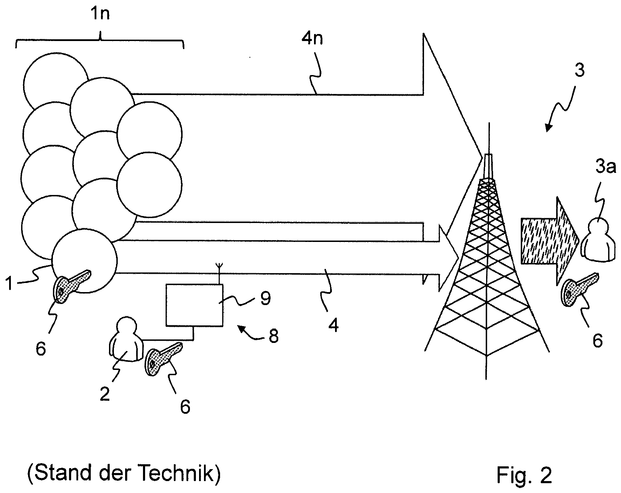

Wie in Fig. 2 gezeigt, kann der erste Schlüssel 6 des Versorgers 3a mit dem Verbraucher 2 geteilt werden, um diesem den Zugriff auf die Daten des Verbrauchszählers 1 zu ermöglichen. Dadurch wird allerdings nur das Zugriffsproblem gelöst, nicht aber die Anforderung an die Datengranularität und die Datenaktualität. So zeigt Fig. 2 ein hohes Übertragungsvolumen in der Übertragungsinfrastruktur des Versorgers 3a, dass durch die Vielzahl von Verbrauchszählern 1 entsteht, wenn der Verbrauchszähler 1 durch eine Vielzahl von Verbrauchszählern 1 erweitert wird. Durch den gemeinsamen Kanal gibt es für den Gesichtspunkt Dateninhalt zwei mögliche Szenarien: Der Verbraucher 2 kann entweder nur die Daten nutzen, die der Versorger 3a für die eigenen Zwecke senden lässt, oder der Versorger 3a muss mit einem höheren Datenaufkommen umgehen, damit er die für den Verbraucher 2 individuell zusammengestellten Daten senden lässt. Beide Szenarien weisen jedoch erhebliche Mängel in puncto Übertragungssicherheit, Bedienungskomfort und/oder Datenmanagement auf.

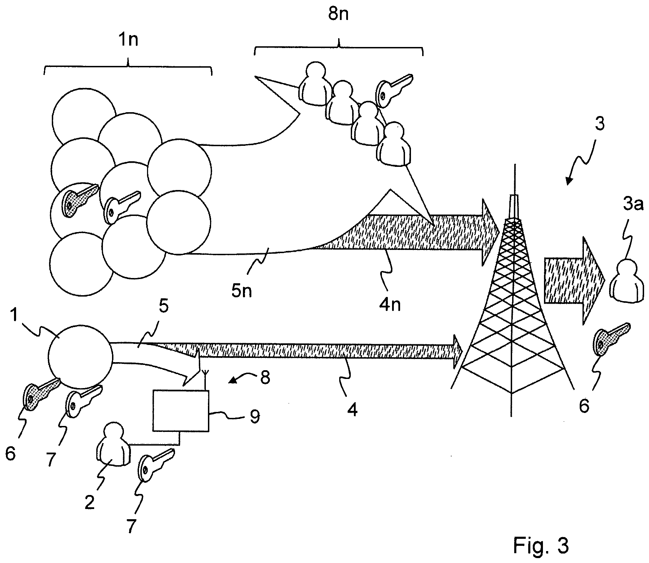

In Fig. 3 ist ein erfindungsgemäßes Verbrauchszählersystem dargestellt, welches eine Mehrzahl von Verbrauchszählern 1 umfasst. Jeweils ein Verbrauchszähler 1 bietet hierbei einen zweiten Datenkanal 5 an, um Daten für den zweiten Empfänger 8 bzw. der Smart-Home-Steuerung 9 des Verbrauchers 2 verfügbar zu machen. Diese Daten werden mit mindestens einem weiteren zweiten Schlüssel 7 zählerseitig verschlüsselt. Dadurch kann eine individuelle Datenrate der Messwerte bereitgestellt sowie eine sichere Datenbasis für den Verbraucher 2 gewährleistet werden. Diese Datenbasis ist damit sowohl geheim als auch integer und nicht potentiell durch eine Vorverarbeitung eines unberechtigten Dritten kompromittiert.

Das Verbrauchszählersystem kann somit aus Gesichtspunkten der Übertragungseffizienz und Datensicherheit weiterhin optimal für den Versorger 3a betrieben werden (Versorgerzugriff). Auch die gesetzlichen Verpflichtungen des Versorgers 3a bezüglich des Datenschutzes, wie z. B. Datensparsamkeit und Sicherungspflicht, sind unterstützt. Durch eine Unidirektionalität des zweiten Datenkanals 5 entsteht auch kein neuer Angriffsvektor auf Geräteebene des Verbrauchszählersystems. Das Sicherheitsbedürfnis des Verbrauchers 2 wird somit wesentlich unterstützt. Die Daten sind für den Verbraucher 2 durch den eigenen zweiten Datenkanal 5 unverfälscht. Es ist ihm dadurch auch möglich, für die eigene Verwendung eine höhere Datenrate zu nutzen, ohne Dritten die Möglichkeit zu eröffnen, persönliche Verbrauchsmusteranalysen anzustellen.

Ferner bietet das erfindungsgemäße Verfahren die Möglichkeit, dass eine Gruppe von Verbrauchszählern 1n einen gemeinsamen ersten Datenkanal 4n zur Übertragung der Daten zwischen der Gruppe von Verbrauchszählern 1n und dem ersten Empfänger 3 nutzen. Zudem kann ein gemeinsamer zweiter Datenkanal 5n zur Übertragung der Daten zwischen der Gruppe von Verbrauchszählern 1n und dem zweiten Empfänger 8 oder einer Gruppe von zweiten Empfängern 8n vorgesehen sein. Logischerweise besitzen alle Verbrauchszähler der Gruppe 1n den ersten Schlüssel 6 zur Übertragung der Daten über den ersten Datenkanal 4n und den zweiten Schlüssel 7 zur Übertragung der Daten über den zweiten Datenkanal 5n. Der Datenkanal 4n kann hierbei als ein physikalischer Datenkanal ausgestaltet sein, der gemeinsam zur Datenübertragung genutzt wird, jedoch zählerindividuell verschlüsselt wird, d. h. für die Verbrauchszähler der Gruppe 1n sind jeweils unterschiedliche logische Datenkanäle 4n vorgesehen. Beispielsweise kann diese Ausgestaltung genutzt werden, um die jeweiligen Verbrauchszähler 1 eines Haushaltes, z. B. Gaszähler, Wasserzähler, Stromzähler und Wärmemengenzähler, als Gruppe von Verbrauchszählern 1n über den gemeinsamen zweiten Datenkanal 5n in die Smart-Home-Steuerung 9 des Haushaltes einzubinden oder um einem Vermieter als Teil einer Gruppe von Empfängern 8n Informationen zur Nebenkostenabrechnung zukommen zu lassen.

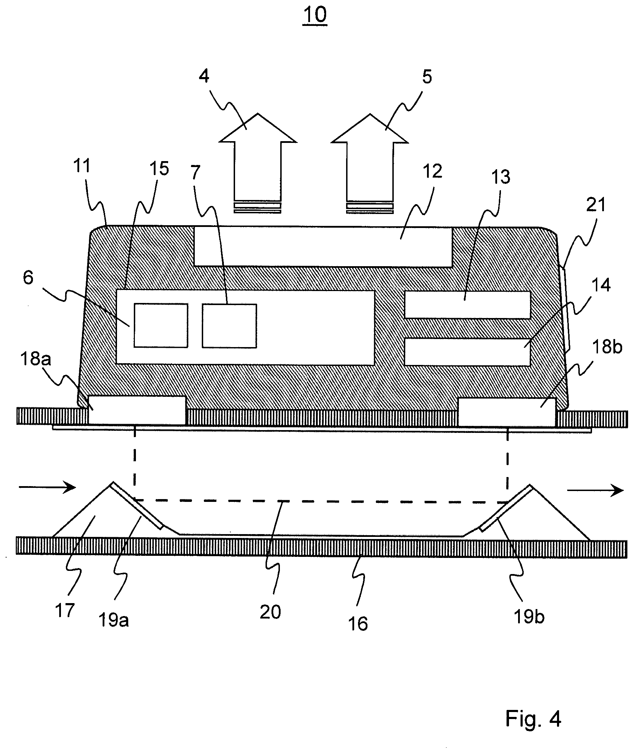

Bezugsziffer 10 in Fig. 4 bezeichnet einen erfindungsgemäßen Verbrauchszähler, der als Wasserzähler ausgestaltet ist. Der Verbrauchszähler 10 umfasst ein Anschlussgehäuse 16, mit dem der Verbrauchszähler 10 in das Wasserleitungsnetz des Verbrauchers 2 installiert werden kann. Die Durchströmungsrichtung des Wassers ist in Fig. 4 mit schwarzen Pfeilen dargestellt. Ferner umfasst der Verbrauchszähler 10 als Mittel zur Verbrauchsbestimmung eine Ultraschallmessanordnung zum Bestimmen der Durchflussmenge des Wassers. Teil der Ultraschallmessanordnung sind zwei Ultraschallwandler 18a, 18b, zwischen denen sich eine U-förmige Ultraschallmessstrecke 20 befindet, die an Umlenkeinrichtungen 19a, 19b, wie z. B. Spiegel oder Reflektoren, umgelenkt wird. Die Umlenkeinrichtungen 19a, 19b sowie die Ultraschallmessstrecke 20 befinden sich innerhalb eines Messeinsatzes 17, der als vorkonfektionierbares Bauteil in einfacher Weise in das Anschlussgehäuse 16 des Verbrauchszählers 10 installierbar bzw. einschiebbar ist. Zweckmäßigerweise umfasst der Verbrauchszähler 10 eine Energiequelle, die gemäß Fig. 4 als Batterie 14 ausgestaltet ist. Alternativ kann der Verbrauchszähler 10 auch über einen Akkumulator oder einen Stromleitungsanschluss mit Energie versorgt werden. Die Verbrauchsbestimmung beim Verbrauchszähler 10 erfolgt z. B. dadurch, dass von den Ultraschallwandlern 18a, 18b Ultraschallsignale entlang der Ultraschallmessstrecke 20 gesendet werden. Die Ultraschallsignale werden nach dem Durchlaufen der Ultraschallmessstrecke 20 vom jeweils anderen Ultraschallwandler 18a, 18b empfangen. Die Verbrauchsbestimmung kann dabei z. B. anhand einer Laufzeitdifferenzmethode oder einer anderen aus dem Stand der Technik bekannten Methode zur Durchflussmengenbestimmung erfolgen.

Der Verbrauchszähler 10 umfasst ferner eine Steuer- und Auswerteeinheit 11 mit einem Prozessor 13, die dazu hergerichtet ist, Daten aus den Messwerten zu genieren und den Verbrauchszähler 10 zu steuern. Darüber hinaus umfasst der Verbrauchszähler 10 eine Sende- und Empfangseinrichtung 12, die insbesondere zum Übertragen der Daten an den ersten Empfänger 3 und/oder zweiten Empfänger 8 dient. Die Daten können hierbei durch die Sende- und Empfangseinrichtung 12 über den ersten Datenkanal 4 zwischen Verbrauchszähler 10 und erstem Empfänger 3 und/oder den zweiten Datenkanal 5 zwischen dem Verbrauchszähler 10 und dem zweiten Empfänger 8 gesendet und/oder empfangen werden. Zudem umfasst der Verbrauchszähler 10 einen Speicher 15 zum Speichern der Daten, wie z. B. der Verbrauchsdaten, sowie zum Hinterlegen des ersten 6 und des zweiten Schlüssels 7. Durch den zusätzlichen zweiten Schlüssel 7, der dazu dient, den zweiten Datenkanal 5 zu sichern, wird der Verbrauchszähler 10 um einen zusätzlichen vorzugsweise unidirektionalen Datenkanal erweitert. Alternativ oder zusätzlich kann ein zusätzliches Sendeschema für den Datenupload vorgesehen sein, sodass über den zweiten Datenkanal 5 z. B. eine bidirektionale Kommunikation zwischen dem Verbrauchszähler 1 und der Smart-Home-Steuerung 9 erfolgen kann. Dadurch kann z. B. auch eine eigene Konfiguration des Dateninhalts der Übertragungen über den zweiten Datenkanal 5 durch die Smart-Home-Steuerung 9 erfolgen.

Wie in Fig. 4 gezeigt, kann der Verbraucherschlüssel bzw. der zweite Schlüssel 7 direkt am Verbrauchszähler 10 verfügbar gemacht werden, z. B. durch ein Etikett 21, eine Prägung, einen Aufdruck oder über ein der Übersichtlichkeit halber in Fig. 4 nicht dargestelltes Display, welches sich vorzugsweise am Verbrauchszähler 10 befindet.

Ferner handelt es sich bei der Ausgestaltung in Fig. 4 um eine bevorzugte Ausgestaltung eines Wasserzählers gemäß der vorliegenden Erfindung, jedoch ist die vorliegende Erfindung ausdrücklich nicht auf eine derartige Ausgestaltung beschränkt, sodass auch andersartige Wasserzähler sowie Strom-, Wärmemengen- oder Gaszähler von der vorliegenden Erfindung umfasst sind.

Zusammenfassend entstehen dem Versorger 3a durch die Verwendung eines erfindungsgemäßen Verbrauchszählers 1, 10 bzw. des erfindungsgemäßen Verfahrens mit sehr geringem Aufwand potentiell vermarktbare Mehrwerte und Leistungsmerkmale, mit denen die Zufriedenheit des Verbrauchers 2 in besonderem Maße verbessert werden kann. Hierzu wird der Verbrauchszähler 1, 10 des Versorgers 3a verwendet, um mit den verfügbaren Mitteln zur Datenübertragung eine dedizierte Nachricht mit spezifischem Inhalt und Verschlüsselung für einen zusätzlichen Empfänger (zweiter Empfänger 8) zu versenden. Durch die frühe Trennung der Kommunikations- bzw. Datenkanäle ab dem Verbrauchszähler 1, 10 wird erreicht, dass die Daten für alle Empfänger 3, 8 mit einer Ende-zu-Ende-Verschlüsselung versehen werden und somit eine optimale Aktualität und Granularität der Daten gewählt wird. Der erste Empfänger 3 sowie der zweite Empfänger 8 sind somit unabhängig.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen. Die vorliegende Erfindung ist jedoch so, wie sie in den Ansprüchen definiert ist. Der Schutzbereich wird durch die Ansprüche bestimmt.

### BEZUGSZEICHENLISTE

- 1: Verbrauchszähler
- 1n: Gruppe von Verbrauchszählern
- 2: Verbraucher
- 3: erster Empfänger
- 3a: Versorger
- 4: erster Datenkanal
- 4n: erster Datenkanal (für eine Gruppe von Verbrauchszählern)
- 5: zweiter Datenkanal
- 5n: zweiter Datenkanal (für eine Gruppe von Verbrauchszählern)
- 6: erster Schlüssel
- 7: zweiter Schlüssel
- 8: zweiter Empfänger
- 8n: Gruppe von zweiten Empfängern
- 9: Smart-Home-Steuerung
- 10: Verbrauchszähler
- 11: Steuer- und Auswerteeinheit
- 12: Sende- und Empfangseinrichtung
- 13: Prozessor
- 14: Batterie
- 15: Speicher
- 16: Anschlussgehäuse
- 17: Messeinsatz
- 18a: Ultraschallwandler
- 18b: Ultraschallwandler
- 19a: Umlenkeinrichtung
- 19b: Umlenkeinrichtung
- 20: Ultraschallmessstrecke
- 21: Etikett

## Patentansprüche

1. Verfahren zum Betrieb eines Verbrauchszählersystems, bei dem
der Verbrauch an einem Versorgungsmedium durch einen Verbraucher (2) anhand eines Verbrauchszählers (1, 10) bestimmt wird,
der Verbrauch in Form von Daten zwischen dem Verbrauchszähler (1, 10) und einem ersten Empfänger (3) übertragen wird, wobei
der erste Empfänger (3) einem übergeordneten Versorger (3a) zugeordnet ist,
die Übertragung der Daten zwischen dem Verbrauchszähler (1, 10) und dem ersten Empfänger (3) über einen ersten Datenkanal (4) erfolgt, und
die Daten zur Übertragung über den ersten Datenkanal (4) anhand eines ersten Schlüssels (6) zählerseitig verschlüsselt werden, wobei ein zweiter Datenkanal (5) zur Übertragung der Daten zwischen dem Verbrauchszähler (1, 10) und einem zweiten Empfänger (8) vorgesehen ist,
**dadurch gekennzeichnet, dass**
der zweite Empfänger eine Verbraucheranwendung umfasst, wobei die Daten des zweiten Datenkanals (5) vom Verbraucher individuell konfigurierbar sind und die Daten zur Übertragung über den zweiten Datenkanal (5) mittels eines zweiten Schlüssels (7) zählerseitig verschlüsselt werden.

2. Verfahren nach Anspruch 1, **dadurch gekennzeichnet, dass** die Daten vor der Übertragung zählerseitig verschlüsselt und nach der Übertragung durch ersten Empfänger (3) anhand des ersten Schlüssels (6) und/oder durch den zweiten Empfänger (8) anhand des zweiten Schlüssels (7) entschlüsselt werden.

3. Verfahren nach Anspruch 1 oder 2 , **dadurch gekennzeichnet, dass** es sich bei dem ersten Schlüssel (6) und/oder zweiten Schlüssel (7) um einen symmetrischen oder asymmetrischen Schlüssel handelt.

4. Verfahren nach mindestens einem der vorhergehenden Ansprüche, **dadurch gekennzeichnet, dass** der zweite Empfänger (8) als Verbraucheranwendung eine Smart-Home-Steuerung (9) umfasst.

5. Verfahren mindestens einem der vorhergehenden Ansprüche, **dadurch gekennzeichnet, dass** es sich bei dem zweiten Datenkanal (5) um einen unidirektionalen Datenkanal handelt, über welchen die Daten vom Verbrauchszähler (1, 10) zum zweiten Empfänger (8) übertragen werden.

6. Verfahren nach mindestens einem der Ansprüche 1-4, **dadurch gekennzeichnet, dass** es sich bei dem zweiten Datenkanal (5) um einen bidirektionalen Datenkanal handelt, über welchen die Daten zwischen Verbrauchszähler (1, 10) und zweiten Empfänger (8) übertragen werden.

7. Verfahren nach mindestens einem der vorhergehenden Ansprüche, **dadurch gekennzeichnet, dass** eine Datenverbindung zwischen ersten Empfänger (3) und zweiten Empfänger (8) vorgesehen ist und die Datenverbindung insbesondere dazu hergerichtet ist, Daten vom ersten Empfänger (3) zum zweiten Empfänger (8) zu übertragen, sodass diese Daten vom zweiten Empfänger (8) über den zweiten Datenkanal (5) an den Verbrauchszähler (1, 10) übertragbar sind.

8. Verfahren nach mindestens einem der vorhergehenden Ansprüche, **dadurch gekennzeichnet, dass** die Daten, vorzugsweise die Auswahl der Daten, welche über den zweiten Datenkanal (5) gesendet werden, durch den Verbraucher (2) und/oder den Versorger (3a) konfigurierbar sind.

9. Verfahren nach mindestens einem der vorhergehenden Ansprüche, **dadurch gekennzeichnet, dass** der Verbrauchszähler (1, 10) über den ersten (4) und/oder zweiten Datenkanal (5) konfigurierbar ist.

10. Verfahren nach mindestens einem der vorhergehenden Ansprüche, **dadurch gekennzeichnet, dass** der zweite Schlüssel (7) über den Verbrauchszähler (1, 10) beziehbar und/oder an diesem ablesbar ist.

11. Verfahren nach mindestens einem der vorhergehenden Ansprüche, **dadurch gekennzeichnet, dass** es sich bei dem ersten (4) und/oder zweiten Datenkanal (5) um einen logischen und/oder physikalischen Datenkanal handelt.

12. Verfahren nach mindestens einem der vorhergehenden Ansprüche, **dadurch gekennzeichnet, dass** es sich bei den Daten um Verbrauchsdaten und/oder Steuer- und/oder Betriebsdaten handelt.

13. Verfahren nach mindestens einem der vorhergehenden Ansprüche, **dadurch gekennzeichnet, dass** es sich bei dem Versorgungsmedium um Gas, Wasser, Strom und/oder Wärmemenge handelt.

14. Verbrauchszähler (1, 10) zur Bestimmung des Verbrauchs an einem Versorgungsmedium durch einen Verbraucher (2), umfassend
Mittel zur Verbrauchsbestimmung,
eine Energieversorgung,
eine Steuer- und Auswerteeinheit (11), die dazu hergerichtet ist, Daten aus den Verbrauchswerten zu generieren,
eine Sende- und Empfangseinrichtung (12) zum Übertragen der Daten, wobei
der Verbrauchszähler (1, 10) dazu eingerichtet ist, die Daten über einen ersten Datenkanal (4) zwischen dem Verbrauchszähler (1) und einem ersten Empfänger (3) zu übertragen, und
die Daten zur Übertragung über den ersten Datenkanal (4) mittels eines ersten Schlüssels (6) zu verschlüsseln, wobei der Verbrauchszähler (1, 10) ferner dazu eingerichtet ist, die Daten über einen zweiten Datenkanal (5) zwischen dem Verbrauchszähler (1) und einem zweiten Empfänger (8) zu übertragen,
**dadurch gekennzeichnet, dass**
der zweite Empfänger eine Verbraucheranwendung umfasst, wobei die Daten des zweiten Datenkanals (5) vom Verbraucher individuell konfigurierbar sind und
die Daten zur Übertragung über den zweiten Datenkanal (5) mittels eines zweiten Schlüssels (7) zählerseitig verschlüsselt werden.

15. Verbrauchszähler nach Anspruch 14, **dadurch gekennzeichnet, dass** die Mittel zur Verbrauchsbestimmung eine Messanordnung zum Bestimmen der Durchflussmenge eines Fluids, der zugeführten und/oder entnommenen Wärmeenergie oder der Menge einer zugeführten und/oder entnommenen elektrischen Größe umfassen.

16. Verbrauchszähler nach Anspruch 14 oder 15, **dadurch gekennzeichnet, dass** ein Speicher (15) zum Speichern der Daten und/oder des ersten Schlüssels (6) und/oder des zweiten Schlüssels (7) vorhanden ist.

## Claims

1. Method for operating a consumption meter system, in which
the consumption of a supply medium by a consumer (2) is determined using a consumption meter (1, 10),
the consumption is transmitted in the form of data between the consumption meter (1, 10) and a first receiver (3), wherein
the first receiver (3) is assigned to a higher-level supplier (3a),
the data are transmitted between the consumption meter (1, 10) and the first receiver (3) via a first data channel (4), and
the data are encrypted at the meter for transmission via the first data channel (4) using a first key (6), wherein there is provision for a second data channel (5) for transmitting the data between the consumption meter (1, 10) and a second receiver (8),
**characterized in that**
the second receiver comprises a consumer application, wherein
the data of the second data channel (5) are individually configurable by the consumer and the data are encrypted at the meter for transmission via the second data channel (5) by means of a second key (7).

2. Method according to Claim 1, **characterized in that** the data are encrypted at the meter before transmission and are decrypted by the first receiver (3) using the first key (6) and/or by the second receiver (8) using the second key (7) after transmission.

3. Method according to Claim 1 or 2, **characterized in that** the first key (6) and/or second key (7) are/is a symmetric or asymmetric key.

4. Method according to at least one of the preceding claims, **characterized in that** the second receiver (8) comprises a smart home controller (9) as consumer application.

5. Method according to at least one of the preceding claims, **characterized in that** the second data channel (5) is a one-way data channel via which the data are transmitted from the consumption meter (1, 10) to the second receiver (8).

6. Method according to at least one of Claims 1 to 4, **characterized in that** the second data channel (5) is a two-way data channel via which the data are transmitted between the consumption meter (1, 10) and the second receiver (8).

7. Method according to at least one of the preceding claims, **characterized in that** there is provision for a data connection between the first receiver (3) and the second receiver (8) and the data connection is configured, in particular, to transmit data from the first receiver (3) to the second receiver (8) so that these data are transmittable from the second receiver (8) via the second data channel (5) to the consumption meter (1, 10).

8. Method according to at least one of the preceding claims, **characterized in that** the data, preferably the selection of the data, which are transmitted via the second data channel (5) are configurable by the consumer (2) and/or the supplier (3a).

9. Method according to at least one of the preceding claims, **characterized in that** the consumption meter (1, 10) is configurable via the first (4) and/or second data channel (5).

10. Method according to at least one of the preceding claims, **characterized in that** the second key (7) is obtainable via and/or readable from the consumption meter (1, 10).

11. Method according to at least one of the preceding claims, **characterized in that** the first (4) and/or second (5) data channel is a logical and/or physical data channel.

12. Method according to at least one of the preceding claims, **characterized in that** the data are consumption data and/or control and/or operating data.

13. Method according to at least one of the preceding claims, **characterized in that** the supply medium is gas, water, electricity and/or heat quantity.

14. Consumption meter (1, 10) for determining the consumption of a supply medium by a consumer (2), comprising:
means for determining consumption,
an energy supply,
a control and evaluation unit (11) which is configured to generate data from the consumption values,
a transceiver device (12) for transmitting the data, wherein
the consumption meter (1, 10) is configured to transmit the data via a first data channel (4) between the consumption meter (1) and a first receiver (3), and to encrypt the data for transmission via the first data channel (4) by means of a first key (6),
wherein the consumption meter (1, 10) is further configured to transmit the data via a second data channel (5) between the consumption meter (1) and a second receiver (8),
**characterized in that**
the second receiver comprises a consumer application, wherein the data of the second data channel (5) are individually configurable by the consumer, and
to encrypt the data at the meter for transmission via the second data channel (5) by means of a second key (7).

15. Consumption meter according to Claim 14, **characterized in that** the means for determining consumption comprise a measuring arrangement for determining the flow rate of a fluid, the input and/or extracted heat energy or the amount of an input and/or extracted electrical quantity.

16. Consumption meter according to Claim 14 or 15, **characterized in that** there is provision for a memory (15) for storing the data and/or the first key (6) and/or the second key (7).

## Revendications

1. Procédé pour faire fonctionner un système de compteur de consommation, avec lequel la consommation d'un fluide d'alimentation par un consommateur (2) est déterminée à l'aide d'un compteur de consommation (1, 10), la consommation est transmise sous la forme de données entre le compteur de consommation (1, 10) et un premier récepteur (3),
le premier récepteur (3) étant associé à un dispositif d'alimentation (3a) de niveau supérieur,
la transmission des données entre le compteur de consommation (1, 10) et le premier récepteur (3) s'effectuant par le biais d'un premier canal de données (4) et
les données, en vue de leur transmission par le biais du premier canal de données (4), étant cryptées du côté du compteur à l'aide d'une première clé (6),
un deuxième canal de données (5) étant présent pour la transmission des données entre le compteur de consommation (1, 10) et un deuxième récepteur (8), **caractérisé en ce que**
le deuxième récepteur comporte une application de consommateur,
les données du deuxième canal de données (5) pouvant être configurées individuellement par le consommateur et les données, en vue de leur transmission par le biais du deuxième canal de données (5), étant cryptées du côté du compteur au moyen d'une deuxième clé (7).

2. Procédé selon la revendication 1, **caractérisé en ce que** les données sont cryptées du côté du compteur avant la transmission et, après la transmission, sont décryptées par le premier récepteur (3) à l'aide de la première clé (6) et/ou par le deuxième récepteur (8) à l'aide de la deuxième clé (7).

3. Procédé selon la revendication 1 ou 2, **caractérisé en ce que** la première clé (6) et/ou la deuxième clé (7) sont des clés symétriques ou asymétriques.

4. Procédé selon au moins l'une des revendications précédentes, **caractérisé en ce que** le deuxième récepteur (8) comporte, comme application de consommateur, une commande d'habitat intelligent (9).

5. Procédé selon au moins l'une des revendications précédentes, **caractérisé en ce que** le deuxième canal de données (5) est un canal de données unidirectionnel par le biais duquel les données sont transmises du compteur de consommation (1, 10) au deuxième récepteur (8).

6. Procédé selon au moins l'une des revendications 1 à 4, **caractérisé en ce que** le deuxième canal de données (5) est un canal de données bidirectionnel par le biais duquel les données sont transmises entre le compteur de consommation (1, 10) et le deuxième récepteur (8).

7. Procédé selon au moins l'une des revendications précédentes, **caractérisé en ce qu'**une liaison de données est présente entre le premier récepteur (3) et le deuxième récepteur (8) et la liaison de données est notamment établie pour transmettre des données du premier récepteur (3) au deuxième récepteur (8), de sorte que ces données peuvent être transmises du deuxième récepteur (8) au compteur de consommation (1, 10) par le biais du deuxième canal de données (5).

8. Procédé selon au moins l'une des revendications précédentes, **caractérisé en ce que** les données, de préférence une sélection des données, qui sont envoyées par le biais du deuxième canal de données (5), peuvent être configurées par le consommateur (2) et/ou le dispositif d'alimentation (3a).

9. Procédé selon au moins l'une des revendications précédentes, **caractérisé en ce que** le compteur de consommation (1, 10) peut être configuré par le biais du premier (4) et/ou du deuxième canal de données (5).

10. Procédé selon au moins l'une des revendications précédentes, **caractérisé en ce que** la deuxième clé (7) peut être obtenue par le biais du compteur de consommation (1, 10) et/ou peut être lue sur celui-ci.

11. Procédé selon au moins l'une des revendications précédentes, **caractérisé en ce que** le premier (4) et/ou le deuxième canal de données (5) sont des canaux de données logiques et/ou physiques.

12. Procédé selon au moins l'une des revendications précédentes, **caractérisé en ce que** les données sont des données de consommation et/ou des données de commande et/ou de fonctionnement.

13. Procédé selon au moins l'une des revendications précédentes, **caractérisé en ce que** le fluide d'alimentation est du gaz, de l'eau, de l'électricité et/ou une quantité de chaleur.

14. Compteur de consommation (1, 10) destiné à déterminer la consommation d'un fluide d'alimentation par un consommateur (2), comprenant
des moyens de détermination de la consommation,
une alimentation en énergie,
une unité de commande et d'interprétation (11) qui est conçue pour générer des données à partir des valeurs de consommation,
un dispositif d'émission et de réception (12) destiné à transmettre les données,
le compteur de consommation (1, 10) étant conçu pour transmettre les données entre le compteur de consommation (1) et un premier récepteur (3) par le biais d'un premier canal de données (4), et
pour crypter les données au moyen d'une première clé (6) en vue de leur transmission par le biais du premier canal de données (4),
le compteur de consommation (1, 10) étant en outre conçu pour transmettre les données entre le compteur de consommation (1) et un deuxième récepteur (8) par le biais d'un deuxième canal de données (5),
**caractérisé en ce que**
le deuxième récepteur comporte une application de consommateur,
les données du deuxième canal de données (5) pouvant être configurées individuellement par le consommateur et
les données, en vue de leur transmission par le biais du deuxième canal de données (5), étant cryptées du côté du compteur au moyen d'une deuxième clé (7).

15. Compteur de consommation selon la revendication 14, **caractérisé en ce que** les moyens de détermination de la consommation comprennent un arrangement de mesure destiné à déterminer le débit volumique d'un fluide, l'énergie thermique acheminée et/ou prélevée ou la quantité d'une grandeur électrique acheminée et/ou prélevée.

16. Compteur de consommation selon la revendication 14 ou 15, **caractérisé en ce qu'**une mémoire (15) destinée à mémoriser les données et/ou la première clé (6) et/ou la deuxième clé (7) est présente.
